# EUROPEAN PATENT APPLICATION

(11) **EP 4 438 164 A1**
(43) Date of publication of application: **02.10.2024**
(21) Application number: 21965671.7
(22) Date of filing: 26.11.2021
(51) Int. Cl.: B01D 69/02, B01D 69/10, B01D 69/12, B01D 71/02, C04B 41/85, B01D 53/22

(54) **SEPARATION MEMBER AND SEPARATION METHOD**

(71) Applicant: Hitachi Zosen Corporation, Osaka-shi, Osaka 559-8559 (JP)
(72) Inventor: GONDO, Daisuke, Osaka-shi, Osaka 559-8559 (JP); KIDA, Koji, Osaka-shi, Osaka 559-8559 (JP)
(74) Representative: Grünecker Patent- und Rechtsanwälte PartG mbB
(86) International application number: PCT/JP2021/043443
(87) International publication number: WO 2023/095300

(57) **Abstract**

A separation member that is disclosed includes a porous support and a separation layer disposed on the porous support. The separation layer includes a zeolite layer containing an aluminosilicate. A total number Nm of atoms of alkali metal elements and alkaline earth metal elements from a third period onwards that are contained in the separation layer is 2.0% or less of a number Nt of tetracoordinate atoms contained in the separation layer.

## Description

### [Technical Field]

The present invention relates to a separation member and a separation method.

### [Background Art]

In recent years, membrane separation technology for concentrating methane by removing carbon dioxide contained in natural gas or biogas utilizing zeolite membranes that allow selective permeation of carbon dioxide have been gaining attention. In general, the performance of zeolite membranes degrades when zeolite membranes are exposed to highly humid gases. Therefore, in current gas separation systems, a dehumidifier is provided in front of a membrane unit that includes a zeolite membrane in order to protect the zeolite membrane and maintain its performance. Gas dehumidified by the dehumidifier and having a very low dew point (e.g., a dew point of-70°C or lower) flows into the membrane unit. However, when gas having a very low dew point is to be produced, the cost and environmental load of dehumidification increase.

Zeolite membranes with high moisture resistance have been proposed as a measure to alleviate the above problems. For example, PTL 1 (International Publication WO 2017/081841) discloses "a crystalline silica membrane composite including a porous substrate and a crystalline pure silica membrane formed on the surface of the porous substrate, in which the pure silica membrane has a CHA-type crystal structure, and a permeation ratio between H₂ and SF₆: H₂/SF₆ exceeds 10". Furthermore, NPL 1 also discloses a zeolite membrane having high moisture resistance.

### [Citation List]

### [Patent Literature]

PTL 1: International Publication WO 2017/081841

### [Non-Patent Literature]

NPL 1: J. Mater. Chem. A, 2, 13083-13092 (2014)

### [Summary of Invention]

### [Technical Problem]

In general, zeolite membranes tend to have higher hydrophobicity and moisture resistance as the silica content increases. Thus, conventionally proposed zeolite membranes having high moisture resistance usually have a high Si/Al ratio. However, in order to obtain a zeolite membrane having a high Si/Al ratio (e.g., 50 or more) with a good yield, the total amount of structure directing agent used during membrane formation increase, which increases production costs and environmental loads. Therefore, in recent years, there is demand for a separation member including a novel zeolite layer having high moisture resistance. Under such circumstances, one of objects of the present disclosure is to provide a separation member that includes a novel zeolite membrane having high moisture resistance even with a low Si/Al ratio, and that can be easily produced.

### [Solution to Problem]

One aspect according to the present disclosure relates to a separation member. The separation member is a separation member that includes a porous support and a separation layer disposed on the porous support, in which the separation layer includes a zeolite layer containing an aluminosilicate, and a total number Nm of atoms of alkali metal elements and alkaline earth metal elements from a third period onwards that are contained in the separation layer is 2.0% or less of a number Nt of tetracoordinate atoms contained in the separation layer.

Another aspect according to the present disclosure relates to a separation method. The separation method includes a separation step of separating a mixed gas using a separation member, in which the separation member is the separation member according to the present disclosure.

### [Advantageous Effects of Invention]

According to the present disclosure, it is possible to obtain a separation member that includes a novel zeolite membrane having high moisture resistance even with a low Si/Al ratio, and that can be easily produced. Furthermore, according to the present disclosure, highly humid gas can be separated.

While novel features of the present invention are set forth particularly in the appended claims, the present invention, both as to organization and content, will be better understood and appreciated, along with other objects and features thereof, from the following detailed description taken in conjunction with the drawings.

### [Brief Description of Drawings]

[FIG. 1] An image of a cross section of a separation member A1 captured using a field-emission scanning electron microscope.
[FIG. 2] A graph showing an example of the relationship between acceleration voltage and detectable depth (approximate) for scanning electron microscope and energy-dispersive X-ray spectroscopy.
[FIG. 3] A graph showing part of the results of Examples.
[FIG. 4] A graph showing another part of the results of Examples.
[FIG. 5] A graph showing another part of the results of Examples.
[FIG. 6] A graph showing another part of the results of Examples.

### [Description of Embodiments]

An example of an embodiment according to the present disclosure will be described below. Although an embodiment according to the present disclosure will be described below using an example, the present disclosure is not limited to the example described below. Although specific numerical values and materials may be mentioned as examples in the following description, other numerical values and other materials may be used as long as effects of the present disclosure can be obtained. Herein, a range described as "numerical value Ato numerical value B" includes the numerical value A and the numerical value B.

### (Separation Member)

A separation member according to this embodiment includes a porous support and a separation layer disposed on the porous support. The separation member and the separation layer may be respectively referred to as a "separation member (S)" and a "separation layer (SL)" hereinafter. The separation layer (SL) includes a zeolite layer containing an aluminosilicate. The total number Nm of atoms of alkali metal elements and alkaline earth metal elements (from the third period onwards in both cases) that are contained in the separation layer (SL) is 2.0% or less of the number Nt of tetracoordinate atoms contained in the separation layer (SL). That is, Nm/Nt, which is the ratio between the number of atoms Nm and the number of atoms Nt, satisfies Nm/Nt≤2.0% (0.020). Hereinafter, alkali metal elements from the third period onwards contained in the separation layer (SL) and the alkaline earth metal elements from the third period onwards may be collectively referred to as "metal elements (M)". In another aspect, the metal elements (M) are alkali metal elements other than Li, and alkaline earth metal elements other than Be. Note that it is also possible to think of Nm/Nt as a mole ratio.

Examples of the metal elements (M) include sodium (Na), potassium (K), Rb (rubidium), Cs (cesium), Fr (francium), magnesium (Mg), calcium (Ca), Sr (strontium), Ba (barium), and Ra (radium). It is conceivable that these metal elements (M) are present as cations in the separation layer (SL).

Examples of the tetracoordinate atoms contained in the separation layer (SL) include Si, Al, Ti, P, Ga, Ge, Fe, Zr, Zn, V, Sn, Pb, and the like. It is conceivable that these are present as tetracoordinate atoms in the zeolite. Therefore, in one aspect, "the number (Nt) of tetracoordinate atoms contained in the separation layer (SL)" can be read as "the total number of atoms of Si, Al, Ti, P, Ga, Ge, Fe, Zr, Zn, V, Sn, and Pb in the separation layer (SL)". In a typical example of the separation layer (SL), out of the tetracoordinate atoms contained in the separation layer (SL), the number of atoms other than silicon (Si) and aluminum (Al) is small, and thus the atoms other than silicon and aluminum can be ignored. Therefore, in a typical example of the separation member (S) according to the present disclosure, "tetracoordinate atoms contained in the separation layer (SL)" can be read as "silicon and aluminum contained in the separation layer (SL)".

As a result of studies, the inventors of the present application have newly found that a zeolite layer having high separation performance and high moisture resistance can be obtained by setting the number of atoms Nm to 2.0% or less of the number of atoms Nt. The present disclosure is based on this new finding.

The zeolite skeleton is mainly constituted by silicon dioxide (SiO₂), some of the silicon atoms are replaced with aluminum atoms, and thus portions of the skeleton are negatively charged. Thus, the charge is balanced because cations of metal atoms are contained in small pores.

While it is not clear why a separation member having high moisture resistance can be obtained due to the configuration of the present disclosure, reasons such as the following are conceivable. It is conceivable that, when the atomic radii of cations contained in small pores are large, voids in the pores are small in size, resulting in a decrease in gas permeability. Also, when small pores contain a large amount of cations, water vapor is likely to be adsorbed into the small pores due to electrostatic interaction between cations and water vapor. It is conceivable that, as a result, the small pores become clogged, and gas diffusivity in the small pores greatly decreases. In the separation member (S) according to the present disclosure, the number of atoms Nm is 2.0% or less of the number of atoms Nt. As a result, it is conceivable that the separation member (S) of the present disclosure exhibits high separation performance even for gases having high humidity.

The number of atoms Nm may be 1.8% or less, 1.4% or less, or 1.0% or less of the number of atoms Nt. The number of atoms Nm may be 0% or more, 0.1% or more, 0.2% or more, 0.4% or more, 0.6% or more, or 0.8% or more of the number of atoms Nt. These upper and lower limits can be used in any combination. For example, the number of atoms Nm may be in a range of 0% to 2.0%, in a range of 0% to 1.8%, in a range of 0% to 1.4%, in a range of 0% to 1.0%, in a range of 0.2% to 2.0%, in a range of 0.4% to 2.0%, in a range of 0.4% to 1.8%, or in a range of 0.4% to 1.4% of the number of atoms Nt. Note that the wording "the number of atoms Nm is 0% of the number of atoms Nt" indicates that the separation layer (SL) does not substantially contain the metal elements (M).

The zeolite layer included in the separation layer (SL) is typically constituted of aluminosilicate having crystallinity. The structure thereof has fine small pores, and can function as a molecular sieve. The zeolite layer includes a zeolite crystal layer. Atypical zeolite layer is substantially constituted of a zeolite crystal layer.

The number of Si atoms contained in the separation layer (SL) may be 3 times or more and less than 50 times, or 5 times or more and less than 14 times the number of Al atoms contained in the separation layer (SL). That is, the "Si/Al ratio", which is the ratio between the number of Si atoms contained in the separation layer (SL) and the number of Al atoms contained in the separation layer (SL), may be 3 or more and less than 50, or 5 or more and less than 14 times. That is, the Si/Al ratio (Si/Al mole ratio in another aspect) may be 3 or more, 5 or more, or 10 or more. The heat resistance of the separation layer (SL) can be increased by setting the Si/Al ratio to 3 or more (preferably 5 or more). The Si/Al ratio may be less than 50, less than 30, less than 20, less than 15, or less than 14. By setting the Si/Al ratio to less than 50 (particularly preferably less than 14), the separation layer (SL) can be produced using a small amount of the structure directing agent. These lower and upper limits can be used in any combination.

The ratio between the number of atoms Nm and the number of atoms Nt, and the Si/Al ratio can be determined using SEM-EDX (scanning electron microscope-energy dispersive X-ray spectroscopy). Specifically, these ratios can be determined using methods described in Examples.

A preferable example of the separation layer (SL) satisfies (1) and (2) below.
(1) The number of atoms Nm is 2.0% or less of the number of atoms Nt. In this case, the number of atoms Nm may be 0% or more, 0.2% or more, or 0.4% or more of the number of atoms Nt.
(2) The number of Si atoms contained in the separation layer (SL) is 3 times or more and less than 15 times (preferably 5 times or more and less than 14 times) the number of Al atoms contained in the separation layer (SL).

A structure of a zeolite that constitutes the zeolite layer may be the structure of an 8-membered oxygen ring (8-membered oxygen ring small pores). Examples of zeolite structures having an 8-membered oxygen ring include DDR-type, CHA-type, LTA-type, AEI-type, and AFX-type zeolite structures. It is possible to obtain a separation member suitable for separating carbon dioxide from natural gas or biogas using the zeolite layer having an 8-membered oxygen ring. The zeolite layer having an 8-membered oxygen ring can be formed using, for example, the method described in Examples.

The structure of the zeolite that constitutes the zeolite layer may be a CRA-type structure. It is possible to obtain a separation member having a large maximum pore volume and high carbon dioxide permeability, using a zeolite layer having a CHA-type structure. The zeolite layer having a CHA-type structure can be formed using, for example, the method described in Examples. Note that "CHA" is a code defined by the International Zeolite Association (IZA) to classify zeolites depending on structures.

The separation layer (SL) may further include seed crystals arranged between a porous support and a zeolite layer. Use of seed crystals preferentially facilitates zeolite production on the porous support on which the seed crystals are disposed, and thus a dense zeolite layer can be obtained with ease. The seed crystals may include silica seed crystals (seed crystals made of SiO₂). Because the content of the metal elements (M) in the zeolite layer can be reduced by using silica seed crystals, the Nm/Nt ratio can be easily set to 2.0% or less. The seed crystals may further include zeolite seed crystals containing an aluminosilicate, in addition to silica seed crystals. However, from the viewpoint of setting the Nm/Nt ratio to 2.0% or less, the mass of zeolite seed crystals is preferably equal to or less than the mass of the silica seed crystals.

The structure of the silica seed crystals may be a structure having 8-membered oxygen ring small pores. The structure of the silica seed crystals may be a CHA-type structure.

The separation layer (SL) preferably include a silica seed crystal layer disposed on the porous support side, and a zeolite crystal layer that is disposed on a surface opposite to the porous support side and contains an aluminosilicate. With this configuration, the separation layer (SL) that satisfies Nm/Nt≤2.0% (0.020) can be easily obtained. This configuration can be realized using the above seed crystals.

When the zeolite layer in the separation layer (SL) has a CHA structure, the peak intensity of the X-ray diffraction peaks of the zeolite layer preferably satisfies the following conditions (1) and/or (2), and may satisfy both conditions (1) and (2). When these conditions are satisfied, the resulting separation layer (SL) has a random orientation, and thus the separation layer (SL) tends to be thinner than a separation layer having an oriented structure, and accordingly the gas permeability increases. Note that 2θ indicates diffraction angle. The X-ray diffraction peaks can be measured using, for example, the method described in Examples.
(1) The intensity ratio determined using (intensity of peak around 2θ=9.6°)/(intensity of peak around 2θ=20.8°) is 1.5 or more and less than 4. The intensity ratio may be 1.5 or more and less than 3, or 1.5 or more and less than 2.
(2) The intensity ratio determined using (intensity of peak around 2θ=17.9°)/(intensity of peak around 2θ=20.8°) is 0.2 or more and less than 0.5. The intensity ratio may be 0.3 or more and less than 0.5, or 0.4 or more and less than 0.5.

Here, the wording "peak around 2θ=9.6°" refers to the largest peak out of the peaks that do not originate from a substrate and are present in a range of 9.6°±0.6° The wording "peak around 2θ=17.9°" refers to the largest peak out of the peaks that do not originate from the substrate and are present in a range of 17.9°±0.6°. The wording "peak around 2θ=20.8°" refers to the largest peak out of the peaks that do not originate from the substrate and are present in a range of 20.8°±0.6°.

There is no particular limitation on the porous support, and a porous support used in a known separation member that includes a zeolite layer may be used. Any porous support may be used as long as a zeolite layer, which will be described later, can be formed on the porous support. Examples of the porous support include porous supports made of alumina, silica, zirconia, titania, silicon carbide, or stainless steel. Usually, molecules that have passed through the zeolite layer further pass through pores of the porous support. As a result, molecular sieving is performed. Therefore, the porous support usually has pores that are larger than small pores of the zeolite layer.

There is no particular limitation on the shape and the size of the porous support. Examples of the porous shape include a tubular shape, a flat plate shape, a honeycomb shape, a hollow fiber shape, and a pellet shape. For example, an example of a tubular porous support has a length in a range of 2 cm to 200 cm, an inner diameter in a range of 0.5 cm to 2.0 cm, and a thickness in a range of 0.5 mm to 4.0 mm.

The porous support may have a cylindrical shape having an outer peripheral surface. In this case, the separation layer (SL) may be disposed on the outer peripheral surface and/or the inner peripheral surface of the cylindrical porous support. For example, the separation layer (SL) may be disposed on the outer peripheral surface.

In an example of a separation method in which a cylindrical separation member (S) is used, a mixed gas containing a gas to be separated is caused to flow outside the cylindrical separation member (S). Apart of the mixed gas passes through the zeolite layer (SL) and the porous support, and flows through a hollow part of the porous support. In this manner, the gas to be separated can be separated from the mixed gas.

### (Method for Producing Separation Member)

One example of a method for producing a separation member (SL) according to the present disclosure will be described below. However, the separation member (SL) may be produced using a method other than the production method described below.

Note that in this specification, with regard to a composition of a material of the separation member, the mole ratio between a Si element source and an Al element source may be expressed as a mole ratio obtained by converting the Si element and the Al element to SiO₂ and Al₂O₃, respectively. The same applies to the composition of the separation member.

### (1) Preparation of Porous Support

First, a porous support (may be referred to as a "support" hereinafter) is prepared. It is possible to use, as the porous support, a porous support used in a separation member in which zeolite is used. For example, the above-described porous support may also be used.

It is preferable that the average small pore diameter and the like of the porous support are selected to satisfy conditions: (a) the porous support can firmly support the zeolite layer, (b) the porous support has low pressure loss, and (c) the porous support has high mechanical strength.

It is preferable to remove impurities such as dust adhering to the surface of the porous support using a method such as washing with water or ultrasonic cleaning. For example, the surface of the support may be cleaned through ultrasonic cleaning with water for 1 to 10 minutes. An arithmetic average roughness Ra of the porous support is preferably 1.0 µm or more, and more preferably 1.2 µm or more. When the porous support has appropriate unevenness, the area of contact with a fluid increases, and thus it can be expected that throughput per unit area will increase. On the other hand, if the Ra is excessively large, seed crystals will be ununiformly supported, resulting in a decrease in yield percentage during production. Therefore, the arithmetic average roughness Ra of the porous support is preferably 2.4 µm or less, and more preferably 2.0 µm or less. Note that the Ra value can be evaluated based on the JIS-94' standard, using a surface roughness measuring device (trade name: SURFCOM1900SD) manufactured by Tokyo Seimitsu Co., Ltd. or the like. Specifically, the Ra value can be sufficiently evaluated when the cutoff wavelength is 0.8 mm, the measurement speed is 0.15 mm/s, and the measurement length is about 4.0 mm.

### (2) Formation of Seed Crystals

A seed crystal layer having the same structure as the zeolite layer to be formed is formed as the seed crystal layer. The seed crystal layer may be formed, for example, using a method similar to a hydrothermal method used for a zeolite layer, which will be described later. For example, an organic structure directing agent and a silica source, which are used to form a later-described zeolite layer, may be used.

When seed crystals made of zeolite are used as seed crystals, the seed crystals may be produced using operation similar to the hydrothermal method used in the formation of the zeolite layer, except that hydrofluoric acid (may be referred to as "HF" hereinafter) is used and a porous support is not used.

Silica seed crystals having a CHA-type structure are desirably produced at a mole ratio of, for example, SiO₂ : organic structure directing agent: HF : H₂O = 1 : 0.5 to 2.5 : 0.5 to 2.5 : 2.5 to 8.0. Silica seed crystals having a CHA-type structure suitable for producing a separation member can be easily obtained by setting this mole ratio to the above range. In some cases, HF may be substituted with ammonium fluoride (NH₄F).

The mole ratio of raw materials for aluminosilicate seed crystals may be SiO₂ : TMAdaOH (a later-described organic structure directing agent): NaOH : H₂O : Al₂O₃ = 1 : 0.05 to 0.5 : 0.1 to 0.3 : 2.5 to 8.0 : 5 to 100. Alternatively, by reducing the organic structure directing agent, the mole ratio may be set to SiO₂ : TMAdaOH : NaOH : H₂O : Al₂O₃ = 1 : 0.05 to 0.2 : 0.1 to 0.3 : 2.5 to 8.0 : 5 to 30.

The particle size of the seed crystals may be in a range of 10 nm to 2 µm (preferably in a range of 100 nm to 1 µm). By setting the particle size of the seed crystals to 2 µm or less, a dense zeolite layer is likely to be formed. When the particle size of the seed crystals is excessively large, the seed crystals may be crushed. The particle size of the seed crystals can be measured using, for example, the dynamic light scattering method or the like. For example, the particle size of seed crystals can be measured by preparing a dispersion solution by dispersing the resulting seed crystals in ion-exchanged water at any concentration, and analyzing the prepared dispersion solution using a particle size measurement device (trade name, FPAR-1000) manufactured by Otsuka Electronics Co., Ltd. When seed crystals are hydrothermally synthesized, it is preferable to add zeolite crystals prepared in advance and having the same structure to a synthesis solution. This can facilitate nucleation of zeolite and easily control the particle size of seed crystals depending on the amount of zeolite crystals added.

In the synthesis of silica seed crystals, a raw material composition (raw material gel) is introduced into a pressure vessel (usually an autoclave), and then hydrothermal synthesis is performed. Then, the obtained reaction product (silica seed crystal) is washed with ion-exchanged water and then dried under a reduced pressure. Seed crystals prepared in advance may be added to the raw material composition (raw material gel). This facilitates crystallization of the seed crystals, which makes it possible to control the particle size of the seed crystals with ease. Silica seed crystals may be prepared according to the method described in International Publication WO 2017/142056.

### (3) Step of forming seed crystal layer

Then, a seed crystal layer is formed on the porous support. There is no particular limitation on a method for forming a seed crystal layer on the porous support. For example, the seed crystal layer may be adhered to the support by dispersing seed crystals in a solvent such as water to prepare a dispersion solution, and immersing the support in the dispersion solution (dipping method). Alternatively, the seed crystal layer may be formed by mixing a solvent such as water and seed crystals to prepare a slurry, and applying the slurry to the surface of the support. The amount of seed crystals applied may be, for example, 1×10⁻⁴% to 1×10⁻³% of the mass of the porous support. The support to which the seed crystals have been applied may be subjected to heat treatment at a temperature in a range of 450°C to 700°C in order to improve the adhesion between the support and the seed crystals.

The percentage of the seed crystal powder in the dispersion solution may be 1% by mass or less (e.g., 0.5% by mass or less, 0.1% by mass or less, or 0.05% by mass or less) of the dispersion solution. Also, the percentage of the seed crystal powder in the dispersion solution may be 0.01% by mass or more of the dispersion solution.

The amount of the metal elements (M) contained in the separation layer (SL) also changes depending on the seed crystals. Therefore, the mixing ratio of silica seed crystals and aluminosilicate seed crystals may be in a range of silica seed crystals : aluminosilicate seed crystals = 1 : 0 to 4 (e.g., in a range of 1 : 0 to 1). Preferably, only silica seed crystals are used as seed crystals. As a result, a silica seed crystal layer can be formed.

### (4) Formation of zeolite layer

A zeolite layer is formed on the porous support that has silica seed crystals disposed on the surface thereof. Specifically, the zeolite layer is hydrothermally synthesized in a state in which the porous support is immersed in a raw material composition (gel) for synthesizing the zeolite layer.

The composition of the raw material for synthesizing the zeolite layer includes a silica source, an aluminum source, a metal element (M) source, an organic structure directing agent, HF, and water.

Examples of the silica source include amorphous silica, colloidal silica, silica gel, sodium ketoate, tetraethyl orthosilicate (TEOS), and trimethylethoxysilane. Examples of the alumina source include alumina oxide, sodium aluminate, and aluminum hydroxide. Alternatively, zeolite may also be used as a material that functions as both a silica source and an alumina source. Examples of such zeolites include FAU-type zeolites and MOR-type zeolites.

There is no particular limitation on a source of the metal elements (M), and, for example, hydroxides of the metal elements (M) may also be used. Specifically, sodium hydroxide, potassium hydroxide, rubidium hydroxide, cesium hydroxide, magnesium hydroxide, calcium hydroxide, strontium hydroxide, or barium hydroxide may be used as the metal element (M) source.

An organic structure directing agent having N,N,N-trialkyl-1-adamantane ammonium cation derived from 1-adamantanamine may be used as the organic structure directing agent, and for example, hydroxides thereof are preferably used. In particular, N,N,N-trimethyl adamantane ammonium hydroxide (TMAdaOH) is preferably used. Other examples include N,N,N-trialkylbenzyl ammonium hydroxide, etc.

A base may be added to the raw material composition in order to increase structural selectivity. Examples of the base include alkali hydroxides (NaOH, KOH, and the like), etc. These bases also function as the metal element (M) source.

The mole ratio of substances in the raw material composition is preferably selected to satisfy the following.
Organic structure directing agent/SiO₂ = 0.05 to 0.5,
Base/SiO₂ = 0.02 to 0.3,
H₂O/SiO₂ = 100 to 300, and
SiO₂ /Al₂O₃ = 10 to 100.

When an aluminosilicate zeolite is to be produced, the amount of organic structure directing agent used can be smaller than that when a zeolite (e.g., a zeolite composed only of silica) containing an extremely large amount of silica is to be produced. Thus, the mole ratio of the organic structure directing agent to Si preferably satisfies organic structure directing agent/SiO₂ = 0.05 to 0.2. Furthermore, because the amount of the organic structure directing agent required can be reduced by increasing the amount of aluminum component in zeolite, the mole ratio SiO₂/Al₂O₃ between Si and Al is preferably 10 or more and less than 30.

The raw material composition (gel) is aged before hydrothermal synthesis is performed. The temperature and the time for aging are as follows: for example, at room temperature (e.g., a temperature of 15°C to 25°C) and 1 to 24 hours. Specifically, the mixed raw material is stirred to cause a reaction while the raw material is being heated, and the produced water and ethanol are removed through evaporation. Then, ion-exchanged water is added to the remaining solid, and the resulting solution is stirred while the solution is being heated. Note that ethanol is produced through hydrolysis and condensation of alkoxysilane (TEOS or the like) when alkoxysilane is used as the silica source.

The zeolite layer is formed through hydrothermal synthesis. Specifically, first, the above raw material composition and a porous support to which seed crystals have been applied are introduced into a sealed container (e.g., an autoclave). In one example, the raw material composition and the porous support are introduced into a container made of polytetrafluoroethylene, and the container is placed in a sealed container. Then, hydrothermal synthesis is performed in a state in which the porous support is immersed in the raw material composition. As a result, a zeolite layer is formed on the porous support to which the seed crystals have been applied.

The temperature and the time of hydrothermal synthesis may be set such that the temperature is in a range of 140°C to 180°C and the time is in a range of 6 to 48 hours. The pressure for hydrothermal synthesis may be increased or may be an autogenous pressure. The pressure for hydrothermal synthesis may be, for example, the autogenous pressure in the sealed container when hydrothermal synthesis is performed at the above temperature.

After hydrothermal synthesis is completed, the produced zeolite layer is washed with ion-exchanged water and dried. Then, calcining is performed to remove the organic structure directing agent remaining in the zeolite layer. The calcination temperature may be in a range of 400°C to 600°C, and the calcination time may be in a range of 3 to 24 hours. A separation member according to the present disclosure can be obtained by performing the above processes.

The value of "Nm/Nt", which is the ratio of the number of atoms Nm to the number of atoms Nt, and the value of "Si/Al", which is the ratio of the number of Si atoms contained in the separation layer (SL) to the number of Al atoms contained in the separation layer (SL), can be controlled using production conditions. For example, these ratios can be controlled by (a) the type of seed crystals, (b) the amount and ratio of the seed crystals, and (c) the composition of the raw material composition (e.g., a secondary growth solution) for synthesizing the zeolite layer, and the like. The Nm/Nt value can be lowered by using seed crystals having a low content of the metal elements (M) or by using a raw material composition having a low content of the metal elements (M). Also, the Si/Al value of the separation layer (SL) can be lowered by using a raw material composition having a low mole ratio of Si to Al.

### (Separation Method)

A separation method according to the present disclosure includes a separation step of separating a mixed gas using the separation member (S) according to the present disclosure. There is no particular limitation on the separation step except for the use of the separation layer (S) according to the present disclosure, and the separation step may be performed using a method similar to that in a known separation step.

The gas passing through the separation member (S) can be separated from a mixed gas, using the separation member (S). As described above, the separation member (S) has high separation performance and moisture resistance. Therefore, a mixed gas having high humidity can be separated with high efficiency, compared to a conventional method.

The separation method may satisfy the following conditions (1) and/or (2). In this case, the separation method may further satisfy the following condition (3).
(1) The mixed gas contains carbon dioxide gas. In the separation step, carbon dioxide gas is separated from the mixed gas. That is, carbon dioxide gas that has passed through the separation member (S) is separated.
(2) The mixed gas contains water vapor. In the separation step, water vapor is separated from the mixed gas. That is, water vapor that has passed through the separation member (S) is separated.
(3) The mixed gas further contains at least one gas selected from the group consisting of hydrocarbon gas having one or more carbon atoms, hydrogen gas, nitrogen gas, and hydrogen sulfide gas. In one example, methane gas, ethane gas, ethylene gas, propane gas, propylene gas, hydrogen gas, nitrogen gas, hydrogen sulfide, and the like can be separated together with CO₂ using the separation member (S). Examples of hydrocarbon gases having one or more carbon atoms include methane gas, ethane gas, ethylene gas, propane gas, and propylene gas.

The dew point of the mixed gas may be -70°C or higher (e.g., -40°C or higher). Because the separation member (S) is used in the separation method of the present disclosure, even when a mixed gas whose dew point is not extremely low is to be separated, it is possible to suppress a decrease in separation efficiency and deterioration of the separation member (S). The dew point of the mixed gas can be adjusted by dehumidifying the mixed gas.

### Examples

An embodiment of the present disclosure will be described in more detail using Examples. In the Examples, a plurality of separation members were produced and evaluated. Methods for producing and evaluating the separation members will be described below.

### (Seed Crystal Preparation Example 1)

In Preparation Example 1, silica seed crystals having a CHA-type structure were produced using the following method. First, a mixture was obtained by mixing TMAdaOH (may be referred to as "organic structure directing agent") and colloidal silica (silica source) in a container made of polytetrafluoroethylene (may be referred to as "PTFE" hereinafter), and then hydrofluoric acid was added to the mixture. Thereafter, water was completely removed by heating the mixture while the mixture was being stirred, and thus a solid was obtained.

Then, an agate mortar and pestle was used to crush the obtained solid, and ion-exchanged water was added. The final mole ratio of the mixed gel was SiO₂ : TMAdaOH : HF : H₂O = 1: 1.4 : 1.4 : 6.0. Thereafter, the obtained gel was transferred to an inner cylinder made of polytetrafluoroethylene in an autoclave, and hydrothermal synthesis was performed at 150°C for 24 days. The inside of the autoclave was then cooled. Then, the gen in the inner cylinder was washed with ion-exchanged water, filtered, and dried under reduced pressure. A silica seed crystal layer having a CHA-type structure was obtained in this manner.

### (Seed Crystal Preparation Example 2)

In Preparation Example 2, zeolite seed crystals containing an aluminosilicate and having a CHA-type structure were produced using the method described in "Separation and Purification Technology 199(2018), 298-303". Specifically, first, TMAdaOH, sodium hydroxide, FAU-type zeolite (product numbers: HSZ-360 and HSZ-390 manufactured by Tosoh Corporation), and ion-exchanged water were added to a PTFE inner cylinder in an autoclave. The chemical composition of HSZ-360 was SiO₂/Al₂O₃ = 14 (mole ratio). The chemical composition of HSZ-390 was SiO₂/Al₂O₃ = 400 (mole ratio). Zeolite functions as a silica source and an aluminum source. The mole ratio of a material was set to SiO₂ : TMAdaOH : NaOH : H₂O : Al₂O₃ = 1 : 0.2 : 0.2 : 7.0 : 20. Then, the autoclave was sealed, and hydrothermal synthesis was performed at 160°C for 40 hours. The inside of the autoclave was then cooled. Then, the gen in the inner cylinder was washed with ion-exchanged water, and dried at 100°C. Zeolite seed crystals containing an aluminosilicate and having a CHA-type structure were obtained in this manner.

The method for producing seed crystals described above is one example. In the above-described production method, a preferable mole ratio of the material is, for example, SiO₂ : TMAdaOH : NaOH : H₂O : Al₂O₃ = 1 : 0.05 to 0.5 : 0.1 to 0.3 : 2.5 to 8.0 : 5 to 100. Because zeolite containing an aluminosilicate can be prepared using a smaller amount of the organic structure directing agent than that in Preparation Example 1, a more preferable mole ratio of the material is, for example, SiO₂ : TMAdaOH : NaOH : H₂O : Al₂O₃ = 1 : 0.05 to 0.2 : 0.1 to 0.3 : 2.5 to 8.0 : 10 to 30.

### [Separation Member A1]

A seed crystal dispersion solution was produced by mixing the seed crystals obtained in Preparation Example 1 and the seed crystals obtained in Preparation Example 2 at a mass ratio of 1:1, and adding ion-exchanged water to the resulting mixture. The content of the seed crystals in the dispersion solution was 0.05% by mass. The dispersion solution was used to apply the seed crystals to an outer surface of a porous support (cylindrical shape) made of alumina, using a dipping method. A cylindrical porous support used had a length of 1 m, a thickness of 2 mm, an inner diameter of 12 mm, and a surface roughness (the above-described arithmetic average roughness Ra) of 1.2 to 2.0 µm.

A raw material composition (secondary growth solution) for forming a zeolite crystal layer was prepared using the following method. First, a desired secondary growth solution (L1) was obtained by adding, to a beaker, TMAdaOH, ion-exchanged water, NaOH, and FAU-type zeolite (HSZ-360 and HSZ-390 that are manufactured by Tosoh Corporation), and stirring the resulting mixture for 3 hours. The mole ratios of the substances in the secondary growth solution (L1) were as follows: TMAdaOH/SiO₂=0.1, NaOH/SiO₂=0.167, H₂O/SiO₂=150, and SiO₂/Al₂O₃=50.

Next, the porous support to which the seed crystals were adhered was placed in the PTFE inner cylinder in the autoclave, and the inner cylinder was filled with the above secondary growth solution (L1). Then, the autoclave was sealed, and hydrothermal synthesis was performed at 160°C for 24 hours. Through the hydrothermal synthesis, a zeolite crystal layer containing an aluminosilicate and having a CHA-type structure was formed on the surface of the porous support. The above seed crystals were disposed between the porous support and the zeolite crystal layer.

The inside of the autoclave was then cooled. Then, the porous support was taken out from the inner cylinder and washed with ion-exchanged water. Lastly, in order to remove the organic structure directing agent, the porous support was calcined in an electric furnace at 500°C for 10 hours. A separation member A1, in which the zeolite layer was formed on the outer peripheral surface of the porous support, was obtained in this manner.

Next, the following separation test 1 was performed using the separation member A1 to measure CO₂/CH₄ gas separation performance of the separation member A1.

### [Separation Test 1]

A gas permeation test for a mixed gas of CO₂ and CH₄ was performed using the separation member A1. Then, the permeance of gas that passed through the separation member A1 was measured. Agas having a dew point of-40°C under atmospheric pressure and a gas having a dew point of-70°C under atmospheric pressure were used as a mixed gas. The gas having a dew point of-40°C was adjusted by humidifying the gas having a dew point of-70°C. Treatment for drying at 120°C for 1 hour while CO₂ was being supplied to a separation layer at 10 L/min was performed as pretreatment before the test. The test conditions were as follows.
Component ratio of mixed gas: CO₂/CH₄ : 50 mol%/50 mol%
Mixed gas supply pressure: 0.2 MPaA(pascal absolute pressure)
Pressure on mixed gas permeation side: 0.1 MPaA (pascal absolute pressure)
Mixed gas supply flow rate: 40 L/min
Test temperature: 40°C
Atmospheric pressure dew point of mixed gas: -40°, -70°

Note that, although CO₂ was selected as pretreatment gas in Separation Test 1, other gases may be used. Further, other conditions such as supply pressure are not limited to the above conditions, and can be changed as needed.

### [Elemental and Structural Analysis 1]

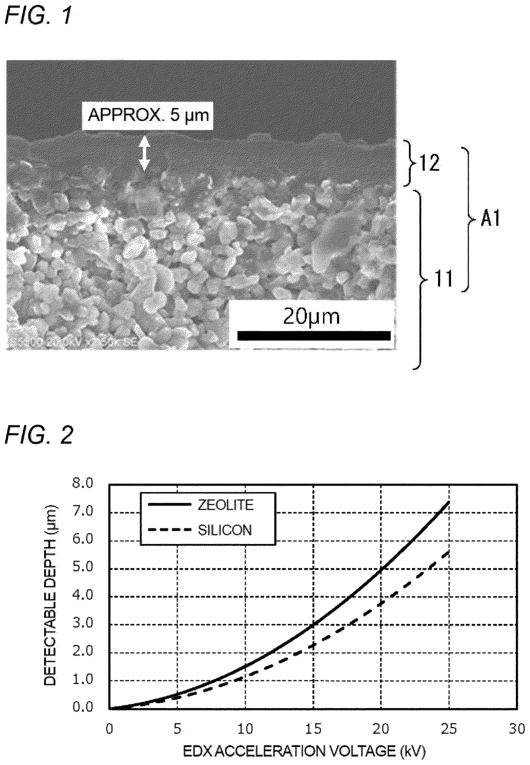

Next, a layer thickness was measured by cutting the separation member A1, and capturing an image of a cross section of a separation layer using an FE-SEM (field emission scanning electron microscope: model: S-5500 manufactured by Hitachi High-Tech Corporation). The FE-SEM image is shown in FIG. 1. The separation member A1 includes a porous support 11 and a separation layer 12. Three places (one each from both longitudinal ends and a vicinity of the center) were selected from the separation layer 12, and the thickness of the separation layer 12 at the three places was measured. At this time, as shown in FIG. 1, the distance from the surface of the porous support 11 to the surface of the separation layer 12 was used as the thickness of the separation layer 12. Also, the average of the thicknesses at the three places was used as the layer thickness of the separation layer 12. The layer thickness of the separation layer 12 of the separation member A1 was approximately 5 µm.

Furthermore, elements in the separation layer were analyzed through SEM-EDX (scanning electron microscope-energy dispersive X-ray spectroscopy: model: QUANTAX200, Xflash Detector 5030 manufactured by BRUKER). SEM-EDX allows analysis in any depth direction depending on the acceleration voltage used. Thus, the thickness of the separation layer was measured through FE-SEM analysis, an acceleration voltage was determined such that the entire separation layer could be analyzed in the thickness direction of the separation layer, and elemental analysis was performed over the entire separation layer in the thickness direction. The analysis was performed at three places in total in the same manner as in the FE-SEM measurement. At this time, any five positions were selected for each place, and the analysis was performed. That is, elemental analysis was performed at 15 positions in total. The average of the measurement results was used as the result of SEM-EDX analysis of the separation layer.

The acceleration voltage was determined based on the relationship between an acceleration voltage determined in advance and a detectable depth. FIG. 2 shows an exemplary graph showing the relationship between the acceleration voltage and the detectable depth in the device used. Because the layer thickness of the separation layer of the separation member A1 was approximately 5 µm, the acceleration voltage during SEM-EDX measurement was set to 20 kV based on FIG. 2. Here, even when the seed crystals are seed crystals other than zeolite seed crystals (e.g., silicon seed crystals), the amount of the seed crystals is very small, and thus the seed crystals can be ignored.

Further, whether or not the formed zeolite layer had a CRA-type structure was checked through XRD analysis (X-ray diffraction analysis). The analysis was performed using a device (model: Ultima IV) manufactured by Rigaku Corporation. At this time, in the same manner as in the measurement through FE-SEM, any five positions were selected for each of three places in total, and analysis was performed at 15 positions. X-ray diffraction peaks derived from the CRA-type structure (diffraction angle 2θ=around 9.6°, around 17.9°, and around 20.8°) were obtained at all of the measurement places, and no X-ray diffraction peaks derived from other zeolite structures were confirmed. Therefore, it was confirmed that the zeolite layer of the separation member A1 had the CRA-type structure. Also, the peak intensity ratios of the X-ray diffraction peaks obtained at this time (9.6°/20.8° and 17.9°/20.8°) were such that the intensity ratio of 9.6°/20.8° was 1.5 or more and less than 4, and the intensity ratio of 17.9°/20.8° was 0.2 or more and less than 0.5. Note that, in the wording "9.6°/20.8°" and "17.9°/20.8°", which are peak intensity ratios, 9.6° indicates the intensity of the peak around 2θ=9.6°, 20.6° indicates the intensity of the peak around 2θ=20.6°, and 17.9° indicates the intensity of the peak around 2θ=17.9°.

The conditions for XRD analysis were as follows.
X-ray source: CuKα ray (output: 40 kV, 40 mA)
Scan axis: θ/2θ
Scan range (2θ): 5.0° to 50.0°
Measurement mode: Continuous Scanning
Divergence slit: 2/3°
Divergent vertical restriction slit: 10 mm
Scattering slit: Open
Light-receiving slit: Open

### [Separation Members A2, A3, C1, and C2]

A seed crystal dispersion solution was produced in a manner same as that for the seed crystal dispersion solution for the separation member A1, where the mass ratios shown in Tables 1 and 2 are used as the ratios of seed crystals. The content of seed crystals in a dispersion solution was 0.05% by mass (the same applies to the production of the following separation members). Separation members A2, A3, C1, and C2 were produced under the same conditions as for the production of the separation member A1, except that the obtained dispersion solution was used as a seed crystal dispersion solution.

### [Separation Members A4, A5, A6, A7, and C3]

A seed crystal dispersion solution was produced in a manner same as that for the seed crystal dispersion solution for the separation member A1, where the mass ratios shown in Tables 1 and 2 are used as the ratios of seed crystals. Seed crystals were applied to the porous support using the dispersion solution and a dipping method similar to the dipping method used for producing the separation member A1. Then, separation members A4, A5, A6, A7, and C3 were produced in the same method as for the production of the separation member A1, except that a secondary growth solution (L2) having the following composition was used. That is, the methods for producing these separation members differ from each other only in the seed crystal dispersion solution. The mole ratios of the secondary growth solution (L2) were TMAdaOH/SiO₂=0.1, NaOH/SiO₂=0.167, H₂O/SiO₂=150, and SiO₂/Al₂O₃=100.

### [Separation Members A8, A9, C4, C5, and C6]

A seed crystal dispersion solution was produced in a manner same as that for the seed crystal dispersion solution for the separation member A1, where the mass ratios shown in Tables 1 and 2 are used as the ratios of seed crystals. Seed crystals were applied to the porous support using the dispersion solution and a dipping method similar to the dipping method used for producing the separation member A1. Then, separation members A8, A9, C4, C5, and C6 were produced in the same method as for the production of the separation member A1, except that a secondary growth solution (L3) having the following composition was used. That is, the methods for producing these separation members differ from each other only in the seed crystal dispersion solution. The mole ratios of the secondary growth solution (L3) were TMAdaOH/SiO₂=0.1, NaOH/SiO₂=0.167, H₂O/SiO₂=150, and SiO₂/Al₂O₃=30.

### [Separation Members A10, A11, C7, C8, and C9]

A seed crystal dispersion solution was produced in a manner same as that for the seed crystal dispersion solution for the separation member A1, where the mass ratios shown in Tables 1 and 2 are used as the ratios of seed crystals. Seed crystals were applied to the porous support using the dispersion solution and a dipping method similar to the dipping method used for producing the separation member A1. Then, separation members A10, A11, C7, C8, and C9 were produced in the same method as for the production of the separation member A1, except that a secondary growth solution (L4) having the following composition was used. That is, the methods for producing these separation members differ from each other only in the seed crystal dispersion solution. The mole ratios of the secondary growth solution (L4) were TMAdaOH/SiO₂=0.1, NaOH/SiO₂=0.167, H₂O/SiO₂=150, and SiO₂/Al₂O₃=20.

### [Separation Members A12, A13, C10, C11, and C12]

A seed crystal dispersion solution was produced in a manner same as that for the seed crystal dispersion solution for the separation member A1, where the mass ratios shown in Tables 1 and 2 are used as the ratios of seed crystals. Seed crystals were applied to the porous support using the dispersion solution and a dipping method similar to the dipping method used for producing the separation member A1. Then, separation members A12, A13, C10, C11, and C12 were produced in the same method as for the production of the separation member A1, except that a secondary growth solution (L5) having the following composition was used. That is, the methods for producing these separation members differ from each other only in the seed crystal dispersion solution. The mole ratios of the secondary growth solution (L5) were TMAdaOH/SiO₂=0.1, NaOH/SiO₂=0.167, H₂O/SiO₂=150, and SiO₂/Al₂O₃=10.

### [Separation Member C13]

A seed crystal dispersion solution was produced in a manner same as that for the seed crystal dispersion solution for the separation member A1, where the mass ratios shown in Table 2 are used as the ratios of seed crystals. Seed crystals were applied to the porous support using the dispersion solution and a dipping method similar to the dipping method used for producing the separation member A1. Then, a separation member C13 was produced in the same method as for the production of the separation member A1, except that a secondary growth solution (L6) having the following composition was used. The mole ratios of the secondary growth solution (L6) were TMAdaOH/SiO₂=0.1, NaOH/SiO₂=0.167, H₂O/SiO₂=150, and SiO₂/Al₂O₃=5.

### [Separation Members A14, A15, A16, C14, and C15]

First, the separation members A1, A2, A3, C1, and C2 were produced. Then, ion exchange between Na and K was performed by immersing those separation members in a 0.01 M potassium chloride aqueous solution at room temperature for 24 hours (KCl treatment). Then, the obtained separation members were dried at 60°C overnight. The separation members A14, A15, A16, C14, and C15 were obtained in this manner. Tables 1 and 2 show a correspondence relationship between separation members before KCl treatment and the obtained separation members.

### [Separation Members A17, A18, A19, A20, C16, and C17]

First, the separation members C2, A3, C15, A15, C1, and C14 were produced. Then, ion exchange between alkali metal ions (Na and K) and H ions was performed by immersing those separation members in a 0.01 M ammonium chloride aqueous solution at room temperature for 24 hours (NH₄Cl treatment). Thereafter, the obtained separation members were dried at 60°C overnight, and further calcined at 350°C for 10 hours in an electric furnace. The separation members A17, A18, A19, A20, C16, and C17 were obtained in this manner. Tables 1 and 2 show a correspondence relationship between separation members before NH₄Cl treatment and the obtained separation members.

The separation members obtained as described above were evaluated in the same manner as for the separation member A1. However, the separation member C13 could not be evaluated because the supply pressure could not be increased to the conditions of Separation Test 1. Usually, when the Si/Al mole ratio in the separation layer is excessively low, the heat resistance of the zeolite layer may decrease, and the separation layer may have collapsed during calcination.

As a result of XRD analysis, it was found that the zeolite layers of the separation members A1 to A20 and C1 to C17 had a CHA-type structure. Also, similarly to the zeolite layer of the separation member A1, the peak intensity ratios of X-ray diffraction peaks (9.6°/20.8° and 17.9°/20.8°) were determined for the zeolite layers of the separation members A2 to A20. As a result, in the zeolite layers of those separation members, the intensity ratio of 9.6°/20.8° was 1.5 or more and less than 4, and the intensity ratio of 17.9°/20.8° was 0.2 or more and less than 0.5.

In all of the separation members, the separation layer had a thickness of approximately 5 µm. Some of the production conditions are shown in Tables 1 and 2, and some of the evaluation results are shown in Tables 3 and 4. "E-n" (n represents a natural number) in Tables 3 and 4 indicates "10⁻ⁿ". The "CO₂ permeance maintenance rate" and the "CO₂/CH₄ permeance ratio maintenance rate" in Tables 3 and 4 can be determined respectively using the following formulas.

CO₂ permeance maintenance rate (%) = 100×(CO₂ permeance for mixed gas having dew point of-40°C) / (CO₂ permeance for mixed gas having dew point of-70°C)

CO₂/CH₄ permeance ratio maintenance rate (%) = 100×(CO₂/CH₄ permeance ratio for mixed gas having dew point of -40°C) / (CO₂/CH₄ permeance ratio for mixed gas having dew point of-70°C)

**[Table 1]**

| Separation Member | Mixing Ratio of Seed Crystals (mass ratio) | | Secondary Growth Solution | Post-Treatment | SEM-EDX Analysis Results (atomic%) | | | | Structure of Separation Layer | |
|---|---|---|---|---|---|---|---|---|---|---|
| | | | | | Si | Al | Na | K | Si/Al | Nm/Nt |
| | Prep. Ex. 1 | Prep. Ex. 2 | | | | | | | | |
| A1 | 1 | 1 | L1 | none | 94.2% | 4.0% | 1.8% | 0.0% | 23.5 | 1.8% |
| A2 | 4 | 1 | L1 | none | 95.0% | 4.0% | 1.0% | 0.0% | 24 | 1.0% |
| A3 | 1 | 0 | L1 | none | 95.5% | 3.9% | 0.6% | 0.0% | 24.2 | 0.6% |
| A4 | 1 | 4 | L2 | none | 96.2% | 2.1% | 1.8% | 0.0% | 46.5 | 1.8% |
| A5 | 1 | 1 | L2 | none | 96.5% | 2.0% | 1.4% | 0.0% | 47.1 | 1.5% |
| A6 | 4 | 1 | L2 | none | 97.2% | 2.1% | 0.7% | 0.0% | 47.4 | 0.7% |
| A7 | 1 | 0 | L2 | none | 97.6% | 2.1% | 0.3% | 0.0% | 47.6 | 0.3% |
| A8 | 4 | 1 | L3 | none | 91.5% | 6.7% | 1.8% | 0.0% | 13.6 | 1.8% |
| A9 | 1 | 0 | L3 | none | 92.1% | 6.7% | 1.3% | 0.0% | 13.8 | 1.3% |
| A10 | 4 | 1 | L4 | none | 88.9% | 9.3% | 1.8% | 0.0% | 9.6 | 1.8% |
| A11 | 1 | 0 | L4 | none | 89.6% | 9.1% | 1.3% | 0.0% | 9.9 | 1.3% |
| A12 | 4 | 1 | L5 | none | 80.6% | 17.5% | 1.9% | 0.0% | 4.6 | 1.9% |
| A13 | 1 | 0 | L5 | none | 81.9% | 16.7% | 1.4% | 0.0% | 4.9 | 1.4% |
| A14 | 1 | 1 | L1 | A1 was subjected to KCl treatment | 94.1% | 4.0% | 1.0% | 0.9% | 23.8 | 1.9% |
| A15 | 4 | 1 | L1 | A2 was subjected to KCl treatment | 94.9% | 4.0% | 0.6% | 0.6% | 23.9 | 1.2% |
| A16 | 1 | 0 | L1 | A3 was subjected to KCl treatment | 95.3% | 3.9% | 0.4% | 0.4% | 24.4 | 0.8% |
| A17 | 1 | 4 | L1 | C2 was subjected to NH₄Cl treatment and then calcination | 94.7% | 4.1% | 1.2% | 0.0% | 23 | 1.3% |
| A18 | 1 | 0 | L1 | A3 was subjected to NH₄Cl treatment and then calcination | 95.7% | 4.0% | 0.4% | 0.0% | 24.2 | 0.4% |
| A19 | 1 | 4 | L4 | C15 was subjected to NH₄Cl treatment and then calcination | 94.6% | 4.1% | 0.6% | 0.7% | 23.1 | 1.3% |
| A20 | 4 | 1 | L4 | A15 was subjected to NH₄Cl treatment and then calcination | 95.7% | 3.9% | 0.1% | 0.2% | 24.3 | 0.3% |

**[Table 2]**

| Separation Member | Mixing Ratio of Seed Crystals (mass ratio) | | Secondary Growth Solution | Post-Treatment | SEM-EDX Analysis Results (atomic%) | | | | Structure of Separation Layer | |
|---|---|---|---|---|---|---|---|---|---|---|
| | | | | | Si | Al | Na | K | Si/Al | Nm/Nt |
| | Prep. Ex. 1 | Prep. Ex. 2 | | | | | | | | |
| C1 | 0 | 1 | L1 | none | 90.8% | 4.0% | 5.2% | 0.0% | 22.6 | 5.5% |
| C2 | 1 | 4 | L1 | none | 93.5% | 4.1% | 2.4% | 0.0% | 23 | 2.5% |
| C3 | 0 | 1 | L2 | none | 95.6% | 2.1% | 2.3% | 0.0% | 46 | 2.3% |
| C4 | 0 | 1 | L3 | none | 85.5% | 6.6% | 7.9% | 0.0% | 13 | 8.6% |
| C5 | 1 | 4 | L3 | none | 88.0% | 6.7% | 5.3% | 0.0% | 13.2 | 5.6% |
| C6 | 1 | 1 | L3 | none | 90.8% | 6.7% | 2.5% | 0.0% | 13.5 | 2.6% |
| C7 | 0 | 1 | L4 | none | 81.8% | 9.1% | 9.1% | 0.0% | 9 | 10.0% |
| C8 | 1 | 4 | L4 | none | 84.9% | 9.1% | 5.9% | 0.0% | 9.3 | 6.3% |
| C9 | 1 | 1 | L4 | none | 88.0% | 9.3% | 2.8% | 0.0% | 9.5 | 2.9% |
| C10 | 0 | 1 | L5 | none | 68.3% | 16.3% | 15.4% | 0.0% | 4.2 | 18.3% |
| C11 | 1 | 4 | L5 | none | 74.6% | 16.9% | 8.5% | 0.0% | 4.4 | 9.3% |
| C12 | 1 | 1 | L5 | none | 79.5% | 17.7% | 2.9% | 0.0% | 4.5 | 3.0% |
| C13 | 1 | 0 | L6 | none | 69.6% | 27.8% | 2.5% | 0.0% | 2.5 | 2.6% |
| C14 | 0 | 1 | L1 | C1 was subjected to KCl treatment | 90.5% | 4.0% | 2.8% | 2.8% | 22.8 | 5.9% |
| C15 | 1 | 4 | L1 | C2 was subjected to KCl treatment | 93.4% | 4.0% | 1.4% | 1.1% | 23.1 | 2.6% |
| C16 | 0 | 1 | L1 | C1 was subjected to NH₄Cl treatment and then calcination | 93.6% | 4.1% | 2.3% | 0.0% | 22.6 | 2.3% |
| C17 | 0 | 1 | L4 | C14 was subjected to NH₄Cl treatment and then calcination | 93.1% | 4.2% | 1.2% | 1.5% | 22.4 | 2.8% |

**[Table 3]**

| Separation Member | Permeance for Mixed Gas with Dew Point of -70°C (mol/(m²·Pa·s)) | | | Permeance for Mixed Gas with Dew Point of -40°C (mol/(m²·Pa·s)) | | | CO₂ Permeance maintenance rate | CO₂/CH₄ Permeance ratio maintenance rate |
|---|---|---|---|---|---|---|---|---|
| | CO₂ | CH₄ | Permeance Ratio CO₂/CH₄ | CO₂ | CH₄ | Permeance Ratio CO₂/CH₄ | | |
| A1 | 3.25E-6 | 9.00E-9 | 361 | 1.3E-6 | 5.0E-9 | 260 | 40% | 72% |
| A2 | 3.75E-6 | 1.05E-8 | 357 | 2.6E-6 | 8.2E-9 | 311 | 68% | 87% |
| A3 | 4.00E-6 | 1.13 E-8 | 356 | 3.0E-6 | 9.1E-9 | 324 | 74% | 91% |
| A4 | 3.52E-6 | 1.62E-8 | 217 | 1.6E-6 | 1.0E-8 | 159 | 45% | 73% |
| A5 | 3.84E-6 | 1.68E-8 | 229 | 2.3E-6 | 1.2E-8 | 192 | 60% | 84% |
| A6 | 4.00E-6 | 1.73E-8 | 232 | 3.0E-6 | 1.4E-8 | 213 | 75% | 92% |
| A7 | 4.16E-6 | 1.88E-8 | 222 | 3.3E-6 | 1.6E-8 | 211 | 80% | 95% |
| A8 | 3.15E-6 | 8.66E-9 | 364 | 1.3E-6 | 4.9E-9 | 258 | 40% | 71% |
| A9 | 3.45E-6 | 9.38E-9 | 368 | 2.1E-6 | 7.0E-9 | 305 | 62% | 83% |
| A10 | 2.73E-6 | 7.66E-9 | 357 | 1.0E-6 | 4.4E-9 | 232 | 37% | 65% |
| A11 | 2.99E-6 | 8.29E-9 | 361 | 1.8E-6 | 6.2E-9 | 289 | 60% | 80% |
| A12 | 2.10E-6 | 6.05E-9 | 347 | 7.4E-7 | 3.5E-9 | 208 | 35% | 60% |
| A13 | 2.30E-6 | 6.54E-9 | 352 | 1.3E-6 | 4.9E-9 | 274 | 58% | 78% |
| A14 | 2.93E-6 | 8.46E-9 | 346 | 1.0E-6 | 4.7E-9 | 218 | 35% | 63% |
| A15 | 3.38E-6 | 9.66E-9 | 349 | 1.9E-6 | 7.0E-9 | 266 | 55% | 76% |
| A16 | 3.60E-6 | 1.02E-8 | 352 | 2.2E-6 | 7.6E-9 | 285 | 60% | 81% |
| A17 | 2.88E-6 | 8.32E-9 | 346 | 8.6E-7 | 4.3E-9 | 201 | 30% | 58% |
| A18 | 3.60E-6 | 1.02E-8 | 352 | 1.3E-6 | 5.4E-9 | 232 | 35% | 66% |
| A19 | 2.64E-6 | 7.32E-9 | 361 | 7.1E-7 | 3.8E-9 | 188 | 27% | 52% |
| A20 | 3.30E-6 | 9.00E-9 | 367 | 1.0E-6 | 4.7E-9 | 216 | 31% | 59% |

**[Table 4]**

| Separation Member | Permeance for Mixed Gas with Dew Point of -70°C (mol/(m²·Pa·s)) | | | Permeance for Mixed Gas with Dew Point of -40°C (mol/(m²·Pa·s)) | | | CO₂ Permeance maintenance rate | CO₂/CH₄ Permeance ratio maintenance rate |
|---|---|---|---|---|---|---|---|---|
| | CO₂ | CH₄ | Permeance Ratio CO₂/CH₄ | CO₂ | CH₄ | Permeance Ratio CO₂/CH₄ | | |
| C1 | 2.50E-6 | 7.50E-9 | 333 | 1.3E-7 | 1.8E-9 | 70 | 5% | 21% |
| C2 | 3.00E-6 | 8.25E-9 | 364 | 2.4E-7 | 2.4E-9 | 102 | 8% | 28% |
| C3 | 3.20E-6 | 1.50E-9 | 213 | 3.5E-7 | 5.5E-9 | 64 | 11% | 30% |
| C4 | 1.50E-6 | 4.30E-9 | 349 | 4.5E-8 | 7.6E-10 | 59 | 3% | 17% |
| C5 | 2.25E-6 | 6.24E-9 | 361 | 1.1E-7 | 1.4E-9 | 79 | 5% | 22% |
| C6 | 2.85E-6 | 7.96E-9 | 358 | 2.3E-7 | 2.1E-9 | 111 | 8% | 31% |
| C7 | 1.30E-6 | 3.80E-9 | 342 | 2.6E-8 | 5.4E-10 | 48 | 2% | 14% |
| C8 | 1.95E-6 | 5.51E-9 | 354 | 8.8E-8 | 1.2E-9 | 71 | 5% | 20% |
| C9 | 2.47E-6 | 7.03E-9 | 351 | 1.9E-7 | 1.8E-9 | 102 | 8% | 29% |
| C10 | 1.00E-6 | 3.00E-9 | 333 | 5.0E-9 | 1.9E-10 | 27 | 1% | 8% |
| C11 | 1.50E-6 | 4.35E-9 | 345 | 3.8E-8 | 6.8E-10 | 55 | 3% | 16% |
| C12 | 1.90E-6 | 5.55E-9 | 342 | 1.3E-7 | 1.5E-9 | 89 | 7% | 26% |
| C13 | - | - | - | - | - | - | - | - |
| C14 | 2.38E-6 | 6.98E-9 | 341 | 7.1E-8 | 1.5E-9 | 48 | 3% | 14% |
| C15 | 2.70E-6 | 7.51E-9 | 360 | 1.6E-7 | 2.1E-9 | 76 | 6% | 21% |
| C16 | 2.40E-6 | 7.43E-9 | 323 | 9.6E-8 | 1.7E-9 | 58 | 4% | 18% |
| C17 | 2.20E-6 | 6.31E-9 | 349 | 6.6E-8 | 2.1E-9 | 31 | 3% | 9% |

The separation member of this example can be used to separate CO₂ from a mixed gas. Thus, separation members having high CO₂ permeance and CO₂/CH₄ permeance ratio are preferable.

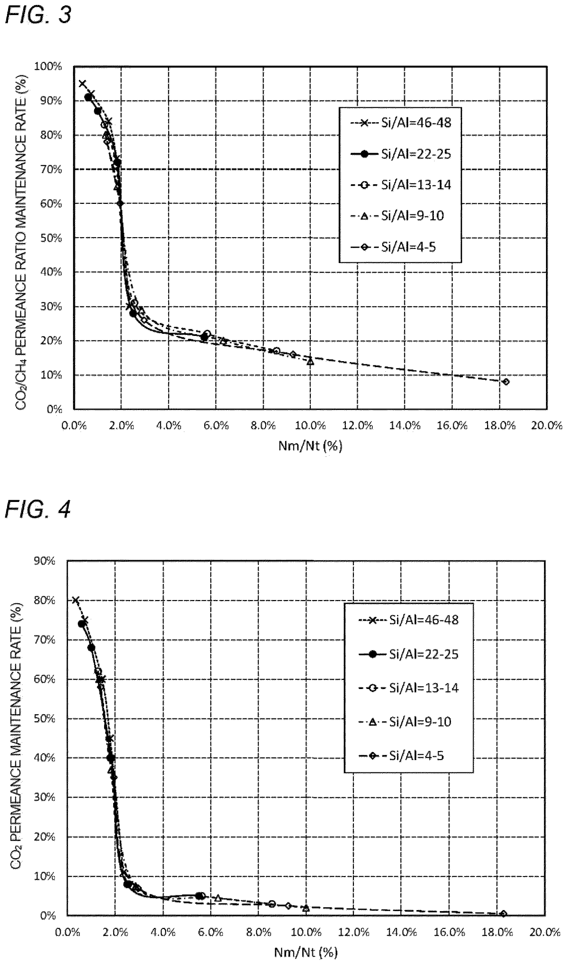

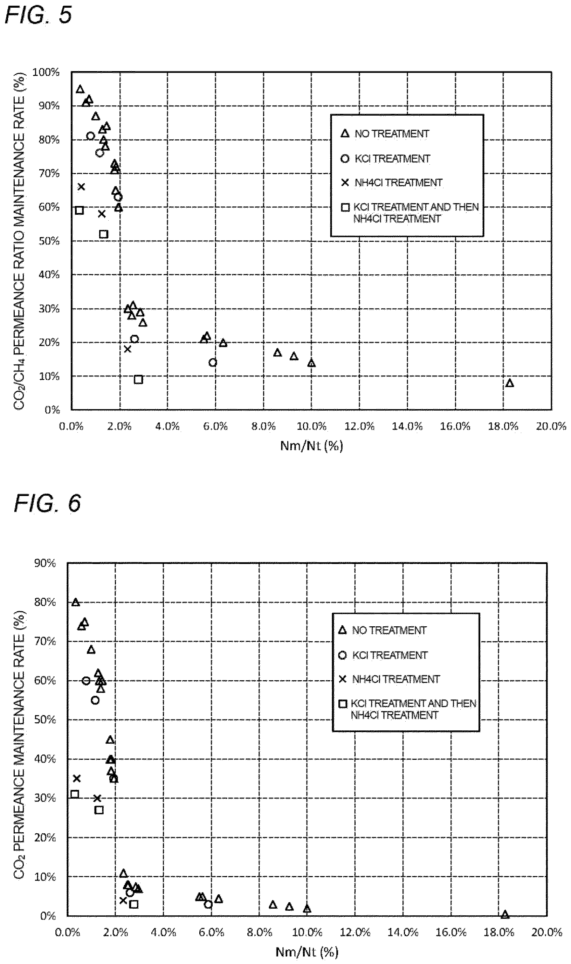

In the results shown in Tables 3 and 4, the separation performance maintenance rates of separation members that were not subj ected to post-treatment are shown in FIGS. 3 and 4. FIG. 3 shows the CO₂/CH₄ permeance ratio maintenance rate. FIG. 4 shows the CO₂ permeance maintenance rate. FIGS. 3 and 4 show data classified according to the magnitude of the Si/Al ratio. FIGS. 5 and 6 show the separation performance maintenance rates of all of the separation members shown in Tables 3 and 4. FIG. 5 shows the CO₂/CH₄ permeance ratio maintenance rate. FIG. 6 shows the CO₂ permeance maintenance rate.

When the separation members C1 to C12 were used, the CO₂ permeance and CO₂/CH₄ permeance ratio of a mixed gas containing a larger amount of water vapor (the mixed gas having a dew point of -40°C) significantly decreased, compared to that of a mixed gas containing a small amount of water vapor (the mixed gas having a dew point of -70°C). It is conceivable that this is because the content of the metal elements (M) in the separation layer was high (because the Nm/Nt value was large). The metal elements (M) reduce the small pore volume of the zeolite crystal layer contained in the separation layer. Further, small pores are clogged by water vapor adsorption that is caused by electrostatic interaction between cations of the metal elements (M) and water vapor. It is conceivable that, as a result, the CO₂ diffusivity in the small pores greatly decreased.

Also, CH₄ permeates through grain boundaries that are larger than small pores of CHA-type zeolite, and thus are less susceptible to the permeation inhibiting effect of water vapor than CO₂. Note that a dense zeolite crystal layer contains few grain boundaries which are defects in the zeolite crystal layer, and thus the grain boundaries have little influence on separation performance. As shown in Tables 3 and 4, the CO₂/CH₄ permeance ratio decreased significantly as water vapor in the mixed gas increased. It is conceivable that this is because the decrease in CO₂ permeance due to water vapor was greater than the decrease in CH₄ permeance due to water vapor.

The separation members A1 to A13 had significantly higher CO₂ permeance maintenance rates and permeance ratio maintenance rates than the separation members C1 to C12. It is conceivable that this is because the content of the metal elements (M) in the separation layers of the separation members A1 to A13 were lower (the Nm/Nt values were smaller) than in the separation members C1 to C12, and thus deterioration in the above properties was suppressed.

The separation members C14 and C15 and the separation members A14 to A16 are all separation members in which some ofNa ions are ion-exchanged with K ions. Comparison between these separation members revealed that the separation members A14 to A16 having a lower content of the metal elements (M) had higher separation performance for a mixed gas containing a large amount of water vapor.

The separation members C16 and C17 and the separation members A17 to A20 are all separation members in which some ofNa ions are ion-exchanged with H ions. Comparison between them revealed that the separation members A17 to A20 having a lower content of the metal elements (M) had higher separation performance for a mixed gas containing a large amount of water vapor.

Based on the above results, in the CO₂/CH₄ gas separation test conducted on the mixed gas containing water vapor, such as Separation Test 1, the Nm/Nt value is preferably 2.0% or less (0.020 or less), more preferably 1.8% or less, even more preferably 1.4% or less (e.g., 1.0% or less), and particularly preferably 0.6% or less (e.g., 0.4% or less).

Although there is no limitation on a method, when the Nm/Nt value exceeds 2.0%, the Nm/Nt value can be set to 2.0 or less by performing post-treatment such as ion exchange of cations of the metal elements (M) with H ions as with the separation members A17 to A20. However, as shown in FIGS. 5 and 6, when the Nm/Nt values are the same, usually, separation members on which no ion exchange is performed are likely to have better properties. The metal elements (M) in a separation layer are preferably alkaline earth metals or alkali metals, and are particularly preferably Na and K.

Although there is no particular limitation on the Si/Al mole ratio in the separation layer, if the Si/Al mole ratio is excessively low, the separation layer is likely to have poor heat resistance. Thus, the Si/Al mole ratio is usually 3 or more, and preferably 5 or more. Also, when the Si/Al mole ratio is very high or infinite, a large amount of structure directing agent is required during the production of a separation member. Therefore, the Si/Al mole ratio is preferably less than 50, more preferably less than 30 (e.g., less than 20), and particularly preferably less than 14. These lower and upper limits can be used in any combination.

### [Industrial Applicability]

The present disclosure can be used for separation members and separation methods.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A separation member comprising:
a porous support; and
a separation layer disposed on the porous support,
wherein the separation layer includes a zeolite layer containing an aluminosilicate, and
a total number Nm of atoms of alkali metal elements and alkaline earth metal elements from a third period onwards that are contained in the separation layer is 2.0% or less of a number Nt of tetracoordinate atoms contained in the separation layer.

2. The separation member according to claim 1,
wherein the number of Si atoms contained in the separation layer is 5 times or more and less than 14 times the number of Al atoms contained in the separation layer.

3. The separation member according to claim 1 or 2,
wherein a structure of a zeolite that constitutes the zeolite layer is a CHA-type structure.

4. The separation member according to any one of claims 1 to 3,
wherein the separation layer further contains seed crystals disposed between the porous support and the zeolite layer, and
the seed crystals include silica seed crystals.

5. The separation member according to claim 4,
wherein the seed crystals further include zeolite seed crystals containing an aluminosilicate.

6. The separation member according to claim 4 or 5,
wherein a structure of the silica seed crystals is a CHA-type structure.

7. A separation method comprising:
a separation step of separating a mixed gas using a separation member,
wherein the separation member is the separation member according to any one of claims 1 to 6.

8. The separation method according to claim 7,
wherein the mixed gas contains a carbon dioxide gas, and
the carbon dioxide gas is separated from the mixed gas in the separation step.

9. The separation method according to claim 7 or 8,
wherein the mixed gas has a dew point of -70°C or higher.
